Europäisches Patentamt

European Patent Office

Office européen des brevets

(11) Veröffentlichungsnummer: **0 256 419**
**A2**

# (12) EUROPÄISCHE PATENTANMELDUNG

(21) Anmeldenummer: **87111230.6**

(22) Anmeldetag: **04.08.87**

(51) Int. Cl.⁴: **H02G 15/26** , H02G 1/14 , H01B 7/28

(30) Priorität: **14.08.86 DE 3627600**

(43) Veröffentlichungstag der Anmeldung:
**24.02.88 Patentblatt 88/08**

(84) Benannte Vertragsstaaten:
**AT CH DE LI NL SE**

(71) Anmelder: **Kabel- und Lackdrahtfabriken GmbH**
**Casterfeldstrasse 62-64**
**D-6800 Mannheim 24(DE)**

(72) Erfinder: **Müller, Karl-Bernard, Dr.-Ing.**
**Burgweg 29**
**D-6945 Hirschberg(DE)**
Erfinder: **Fenske, Hans-Dietmar, Dipl.-Ing.**
**Alpirsbacher Weg 3**
**D-6800 Mannheim 61(DE)**
Erfinder: **Krieger, Wolfgang, Dipl.-Ing.**
**Probststrasse 10**
**D-6719 Obrigheim 4(DE)**
Erfinder: **Spechtmeyer, Horst-Wolfgang, Dipl.-Phys.**
**Neulussheimer Weg 15**
**D-6835 Brühl(DE)**

(74) Vertreter: **Schnabel, Hartmut, Dr.-Ing.**
**Kabel- und Lackdrahtfabriken GmbH**
**Gewerblicher Rechtsschutz Postfach 10 18 55**
**D-6800 Mannheim 1(DE)**

(54) **Verfahren und Vorrichtung zum Regenerieren von Starkstromkabeln.**

(57) Verfahren und Vorrichtung zum Regenerieren von bereits verlegten, geschirmten Starkstromkabeln mit PE-oder VPE-Aderisolierung mit sogenannter watertree-Schädigung, mittels Durchleitung trockenen Gases. Dabei wird das Gas insbesondere entlang seines Schirmbereichs durchströmt und dieser mittels Anschluß des Schirmes an einen Heizstrom zeitweise erwärmt. Anschließend kann mit $SF_6$-Gas wiederum vom Schirmbereich ausgehend - imprägniert werden. Eine geeignete Vorrichtung zur Durchführung des Verfahrens ist beschrieben. Sie kann sowohl für die Regenerierung einer Teilstrecke wie auch einer Gesamtstrecke Einsatz finden.

FIG.2

# VERFAHREN UND VORRICHTUNG ZUM REGENERIEREN VON STARKSTROMKABELN

Die Erfindung betrifft ein Verfahren zum Regenerieren von bereits verlegten, geschirmten Starkstromkabeln mit Aderisolierung aus Kunststoff, insbesondere Polyethylen oder VPE, mit sogenannter watertree-Schädigung, mittels Durchleitung trockenen Gases, wie vorzugsweise Stickstoff.

Es ist bekannt, daß die Lebensdauer von Kabeln mit PE-und VPE-Isolierung durch Anwesenheit von Wasser im Schirm-oder Leiterbereich in Einzelfällen erheblich verkürzt werden kann. Dabei spielt die Bildung von wasseraufnahmefähigen Feinstrukturen in der Kunststoff-isolierung eine wesentliche Rolle. In der amerikanischen Literatur spricht man überwiegend von sogenannten electrochemical trees, in der deutschen Literatur wird überwiegend von watertree-Schädigung gesprochen. Bekannt ist weiterhin, daß die Schädigung der Aderisolierung in einem erheblichen Umfang rückgängig gemacht werden kann durch Trocknung mittels Stickstoff. Dieser wird mittels nachträglich an dem Kabel angebrachter Bohrungen bzw. Zuleitungen in den verseilten, und damit gewisse Zwischenräume aufweisenden Leiter eingeleitet. Ein Beispiel findet sich in IEEE Transaction on Power Apparatus and Systems, Vol. PAS-103, No. 8, August 1984, Seite 1997 bis 2004 beschrieben. Dort wird eine relativ kurze Kabelstrecke zwischen zwei Transformatoren regeneriert, wobei Gaseinlaß bzw. -auslaß mittels T-Stücken in unmittelbarer Nähe der Kabelendverschlüsse erfolgt. In dieser Literaturstelle wird weiterhin berichtet, daß die anschließende Imprägnierung des Leiters mit Isolierflüssigkeiten wie Acetophenon oder Dodekanol gute Erfolge brachte.

Eine nachträgliche Imprägnierung mit Gasen wie Schwefelhexafluorid ($SF_6$) ist dort nicht erwähnt; sie wurde allerdings versuchsweise eingesetzt zur werkseitigen Vorimprägnierung neuer Kabel, wobei die Einleitung wiederum leiterseitig erfolgte. Um größere Entfernungen überwinden zu können, wurde bei der Verseilung des Leiters ein Draht ausgelassen (vgl. CIGRE-Bericht Nr. 21-02 von 1970).

Eigene Untersuchungen haben gezeigt, daß die watertree-Bildung und damit die Initiierung von elektrischen Durchschlägen durch die Aderisolierung überwiegend von außen, also vom Schirmbereich ausgeht und nicht leiterseitig. Eine Trocknung im Schirmbereich kann jedoch auch durch längerfristige Gasdurchleitung durch den Leiter kaum erreicht werden. Weiterhin erscheint die Verwendung der vorgenannten Imprägnierflüssigkeiten einschließlich der zum Teil vorgeschlagenen Silikonöle kritisch, da eine unerwünschte Beeinflussung, insbesondere ein Erweichen der Kabelaufbauelemente die Folge sein kann und im übrigen die Diffisionsgeschwindigkeit ungenügend ist.

Aufgabe der vorliegenden Erfindung war es, die vorgenannten Nachteile des Standes der Technik zu vermeiden und die Voraussetzungen für eine Regenerierung zu schaffen, welche die Restlebensdauer geschädigter Kabel wirksam erhöht und auch über größere Distanzen einsetzbar ist, insbesondere auch für Teilstrecken.

Ausgehend von einem Verfahren der eingangs genannten Art wird vorstehende Aufgabe gemäß der Erfindung dadurch gelöst, daß zumindest ein Teil des eingespeisten Gases das Kabel entlang seines Schirmbereiches durchströmt und dieser mittels Anschluß des Schirms an einen Heizstrom zumindest zeitweise erwärmt wird. Als Heizstrom wird bevorzugt Gleichstrom verwendet, da sich gezeigt hat, daß sich bei Verwendung von Wechselstrom schon über mittlere Längen ein zu großer induktiver Widerstand im System aufbaut. Bei einer bevorzugten Durchführungsform des Verfahrens wird in einer ersten Phase der Regenerierung Stickstoff durchgeleitet. Sinkt der Feuchtigkeitsgrad des austretenden Inertgases ab, bzw. kann angenommen werden, daß ein Großteil der im Kabel vorhandenen bzw. in dieses eingedrungenen Wassermenge entfernt ist, so wird zum Austreiben der Restwassermenge den Schirmdrähten ein Heizstrom aufgeschaltet, mit dem Ziel einer Erwärmung des Schirmbereichs einschließlich eventueller Wickellagen und der angrenzenden Bereiche auf bevorzugt etwa 40 bis 80 °C. Ist auch die Restwassermenge entfernt, so wird in einer dritten Phase des bevorzugten Verfahrens Schwefelhexafluorid eingeleitet. Dies kann unter geringem Überdruck im Kabel belassen werden.

Die Anwendung eines Heizstromes verkürzt die Trocknungszeit erheblich, so daß auch im Falle stärker durchfeuchteter Kabel sich die Trocknung in ökonomisch tragbaren Zeiten, z. B. innerhalb einiger Wochen vornehmen läßt. Grundsätzlich ist es selbstverständlich möglich, einen Teil des eingespeisten Gases in an sich bekannter Weise leiterseitig einzuspeisen, sofern die Durchlässigkeit des Leiters für die vorgesehene Regenerierstrecke ausreicht, ohne übermäßig hohe, eventuell für das Kabel kritische Drücke aufwenden zu müssen. Dasselbe gilt für die Beheizung des Leiters.

Grundsätzlich haben eigene Untersuchungen an älteren Kabeln ergeben, daß die Schädigung überwiegend vom Schirmbereich ausgeht, in den z. B. durch Beschädigung des Kabelmantels Wasser eingedrungen ist. Insofern ist die Erschließung des Schirmbereiches für die Gasdurchleitung sehr wichtig und vorteilhaft. Die Beheizung des gesamten Aderbereichs könnte aber in Sonderfällen auch ausschließlich leiter-statt schirmseitig oder kombiniert erfolgen. Dann ist aber fast immer der Nachteil der Abschaltung des Kabels über die in der Regel Wochen dauernde Trocknungs-bzw. Heizperiode in Kauf zu nehmen. Es ei denn, der Betriebsstrom liege genügend hoch für eine ausreichende Erwärmung. Das ist gerade bei Regenerierungsfällen sehr selten. Insofern ist der Schirmbeheizung allein der Vorzug zu geben im Rahmen der erfindungsgemäßen Varianten.

Weitere vorteilhafte Durchführungsformen des erfindungsgemäßen Verfahrens sind in Unteransprüchen gekennzeichnet.

Im Rahmen der Erfindung ist auch eine Kabelanschlußvorrichtung zur Durchführung des erfindungsgemäßen Verfahrens konzipiert worden. Sie ist gekennzeichnet durch eine metallene, unmagnetische Rohrhülse oder dgl., die regenerierstreckenseitig den Kabelmantel und andern ends die Aderisolierung gasdicht umschließt, mindestens einen Gaseinführungs-bzw. Auslaßstutzen im Bereich des abgesetzten Kabelmantels aufweist, sowie gegebenenfalls Anschlüsse für eine elektrische Zuleitung von außen zur Verbindung mit den Schirmdrähten des regenerierstreckenseitigen Kabelabschnittes. Die Rohrhülse kann auch in vereinfachter Form ausgeführt werden. Sie stellt ein gleichmäßiges und effizientes Einleiten des Gases in den Raum zwischen den Schirmdrähten bzw. zwischen Kabelmantel und -ader sicher, was sich durch einfaches Einstecken eines Einleitungsröhrchens zwischen zwei Schirmdrähte nicht gleichwertig erreichen ließe. Zugleich eignet sich die metallene Rohrhülse zur insbesondere werkseitigen Anbringung eines Anschlusses für eine elektrische Zuleitung zur Beaufschlagung der Schirmdrähte mit Heizstrom.

Es sind zwei Alternativen möglich: Entweder wird die gesamte verlegte Kabelstrecke regeneriert, d. h. durchströmt und beheizt. Dann kann die Funktion der Rohrhülse vereinfacht ausgeführt werden, insbesondere können Anschlüsse für eine elektrische Zuleitung von außen und für die Schirmdrähte des regenerierstreckenseitigen Kabelabschnittes entfallen. Man kann dann die endseitig in Nähe des Endabschlusses herausgeführten Schirmdrähte direkt zur Erdung bzw. Ableitung des Heizstromes auf der einen Seite und zur Einleitung des Heizstromes auf der anderen Seite verwenden, ohne daß deren Trennung mitten in der Kabelstrecke erforderlich wäre. Man wird allerdings in der Regel angesichts der hohen Belastung der Schirmdrähte mit Heizstrom diese nicht in Form eines engverdrillten Seiles bis zur Anschlußstelle führen. Im Falle der ersten Alternative bedarf es damit nur eines Gaseinlasses auf der einen und eines Gasauslasses auf der anderen Seite, gegebenenfalls mit Ventilen und Meßvorrichtungen versehen. Falls auch der Leiterbereich durchströmt werden soll, bedarf es zusätzlicher Maßnahmen, die hier nicht näher beschrieben werden sollen.

Die zweite Alternative besteht darin, daß nur ein Teil der verlegten Kabelstrecke regeneriert wird. Dieser Fall wird später im einzelnen beschrieben. Dabei ist eine Potentialtrennung zweckmäßig, zumindest ist der Schirm aufzutrennen. Regenerierstreckenseitig werden die unterbrochenen Schirmdrähte auf die Rohrhülse aufgebracht, bevorzugt aufgelötet und damit zugleich mit dem Heizstromanschluß verbunden, reststreckenseitig werden die Schirmdrähte aus dem Kabel herausgeführt und geerdet.

Weitere vorteilhafte Ausführungsformen der Kabelanschlußvorrichtung, die zumeist für beide vorgenannten Alternativen Gültigkeit besitzen, sind in Unteransprüchen gekennzeichnet.

Die Kabelanschlußvorrichtung kann selbstverständlich auch nach Beendigung des Regeneriervorganges in der Kabelstrecke verbleiben, wobei lediglich im Falle der vorgeschilderten zweiten Alternative (Teilstrecken-Regenerierung) die Schirmung wieder durchverbunden werden muß. Dies kann durch Verbinden der Erdungsleitung mit der Heizstromleitung geschehen. Etwa eingeleitetes $SF_6$-Gas soll in der damit beschickten Strecke verbleiben. Erstens zur Dauerimprägnierung und damit zur Erhöhung der elektrischen Festigkeit. Zweitens dient das verbliebene Schwefelhexafluorid als Leckindikator, um eine etwaige später (erneute) Kabel-bzw. Mantelbeschädigung sofort erkennen zu können. Das ist wichtig, weil erneutes Eindringen von Wasser nach eigenen Untersuchungen die Durchschlagfestigkeit sehr rasch auf den alten Wert vor der Regenerierung absinken läßt und damit in der Regel die Abschaltung der Strecke ratsam ist. Sollte nochmals in erheblichem Umfang Feuchtigkeit in das Kabel eindringen, kann die verbliebene Kabelanschlußvorrichtung erneut für das beschriebene Regenerierverfahren benutzt werden. Dies kann je nach Verhältnissen wirtschaftlich wesentlich vorteilhafter sein, als der lohnintensive Ausbau und Ersatz des betreffenden Kabelabschnittes.

Im folgenden wird die Erfindung anhand eines Ausführungsbeispieles näher erläutert. In der zugehörigen Zeichnung ist der Fall einer Teilstrecken-Regenerierung mit kompletter Potentialtrennung dargestellt.

Im einzelnen zeigt

Fig. 1 die Gesamtvorrichtung,

Fig. 2 einen Ausschnitt aus Figur 1 im Bereich der Rohrhülse,

Fig. 3 einen Ausschnitt aus Figur 1 im Bereich der Potentialtrennung.

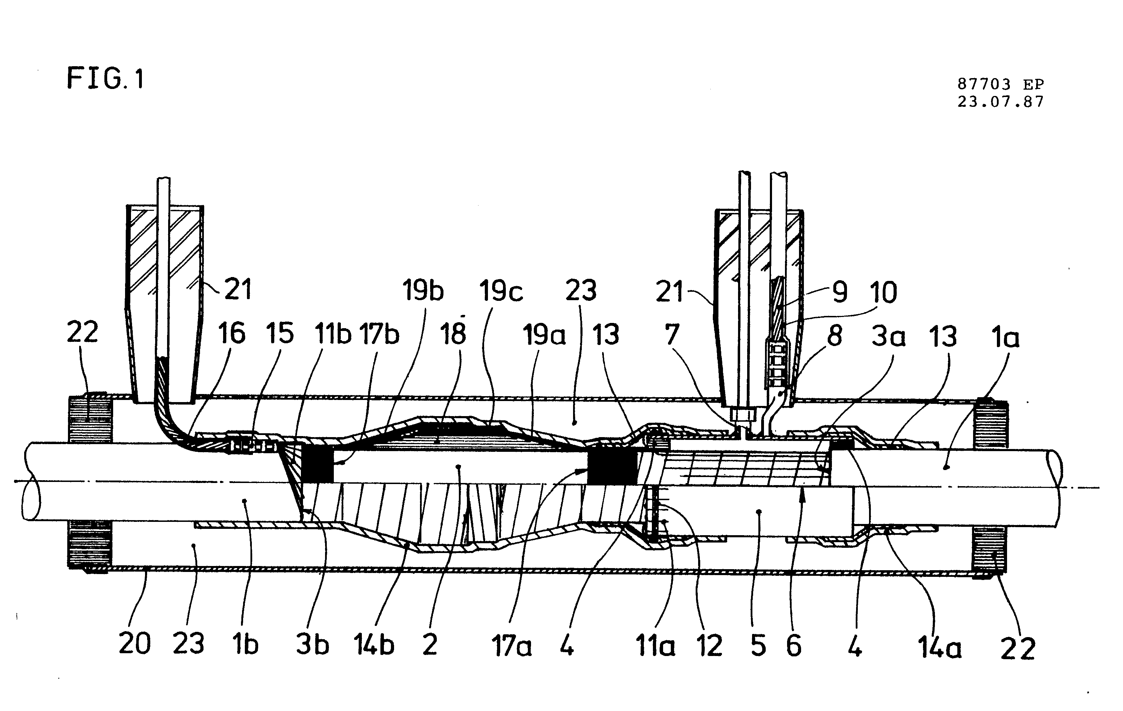

In Figur 1 beginnt rechts die Regenerierstrecke, im linken Teil die unbehandelte Reststrecke. Die Darstellung erfolgt überwiegend als Längsschnitt, wobei zur besseren Kenntlichmachung des konstruktiven Aufbaues für die Ordinate ein größerer Maßstab gewählt wurde als für die Abszisse. Das Kabel bzw. der Kabelmantel ist regenerierstreckenseitig mit 1a bezeichnet, reststreckenseitig mit 1b. Im Anschluß an die beiden Mantelabsetzkanten 3a und 3b wird zur Mitte hin die äußere Leitschicht erkennbar, die an den mit 17a bzw. 17b bezeichneten Stellen abgesetzt ist. (Ein eventuell vorhandenes in der Figur 1 nicht gesondert bezeichnetes aufgewickeltes Glättungsband ist schon früher abgesetzt.)

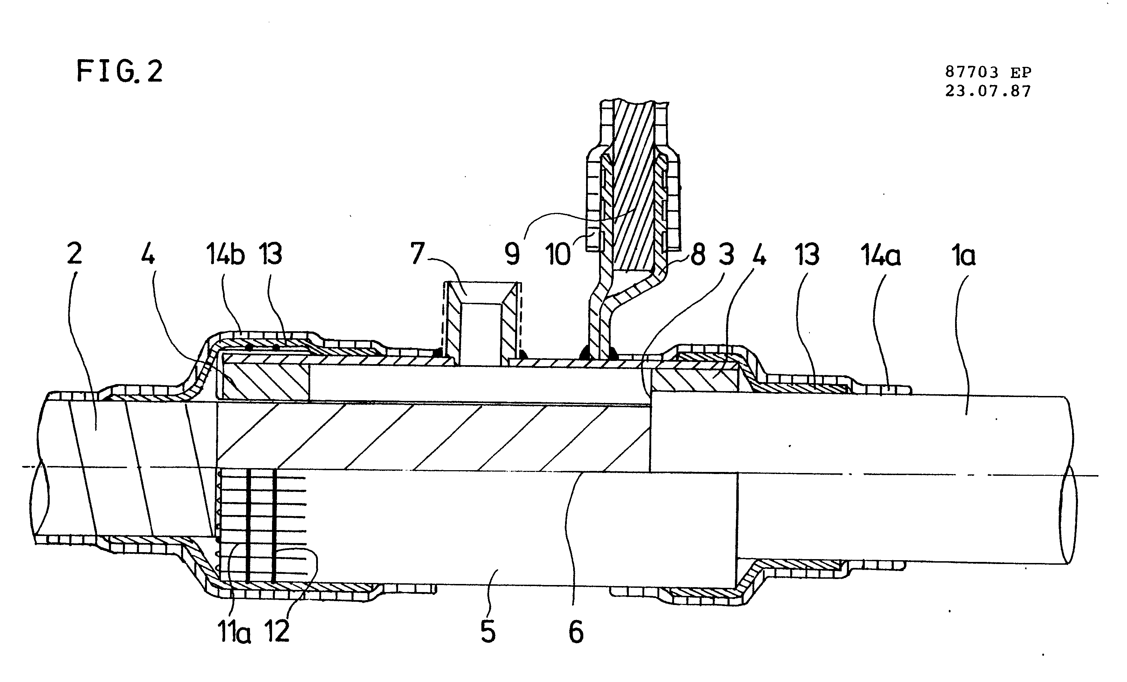

Die metallene Rohrhülse 5 ist oberhalb der Mittellinie geschnitten, unterhalb in der Draufsicht dargestellt. Die folgenden Angaben sind in Figur 2 übereinstimmend dargestellt, und wesentlich deutlicher entnehmbar. An die metallene Rohrhülse 5 ist ein Anschluß 8 zur Aufnahme der Kupferanschlußlitze 9 für den Heizstrom angelötet, vorzugsweise hartgelötet, wegen der erheblichen Erwärmung durch entsprechende Leistungsaufnahme. Als Anschluß 8 kann ein herkömmlicher Kabelschuh dienen. Beide Teile 5 und 8 bestehen vorzugsweise aus Kupfer. Die Litze 9 kann mit einem Schrumpfschlauch 10 isoliert sein. Neben dem Heizstromanschluß 8 befindet sich ein Rohrstutzen 7 für die Einleitung des Gases, Stickstoff oder anschließend Schwefelhexafluorid. Es versteht sich, daß in der Regel am anderen Ende der Regenerierstrecke ein entsprechender Auslaßstutzen vorzusehen ist (nicht gezeichnet). An den Rohrstutzen 7 wird ein (nur in Fig.1 gezeigtes) Zuführungsrohr angebracht. Am linken Ende der Rohrhülse 5 sieht man die abgetrennten und über die Kante der Rohrhülse parallel zurückgebogenen Schirmdrähte 11a. Da sie in der Heizphase des Regenerierverfahrens mit einem Heizstrom erheblicher Größenordnung im Vergleich zu ihrem Querschnitt beaufschlagt werden, z. B. 10 bis 15 A/mm², empfehlen sich gleichmäßige Abstände und eine gute Verbindung mit der Rohrhülse 5. Zweckmäßigerweise legt man die Position der einzelnen Schirmdrähte 11a zunächst mittels eines Bindedrahtes bzw. einer Kupferlitze 12 fest, worauf man die einzelnen Drähte 11a mit der Rohrhülse 5 verlötet. Die Rohrhülse selbst ist normalerweise zweischalig ausgebildet und entlang ihrer Längskante 6 gasdicht verlötet. Sie ruht auf zwei endseitig angebrachten Zentrierwickeln 4 und ist vorzugsweise mittels Dichtwickeln aus selbstverschließenden Kunststoffbändern 13 sowie einer darüber befindlichen Kunststoffschrumpfmanschette 14 gasdicht abgedichtet gegenüber dem Kabelmantel 1a bzw. der Aderisolierung 2 (einschließlich äußerer Leitschicht).

Wie insbesondere aus Figur 2 ersichtlich, ergibt sich ein freier Gaseinleitungsraum rund um die Mantelabsetzkante 3.

Die Kunststoffschrumpfmanschette 14 ist in bekannter Weise längsgeteilt. Sie kann aus zwei einzelnen Stücken 14a, 14b bestehen oder aber einstückig die ganze Länge abdecken (nicht gezeichnet). In diesem Falle ist ein Loch einzustanzen im Bereich des Gaseinführungsstutzen 7 und des Heizstromanschlusses 8.

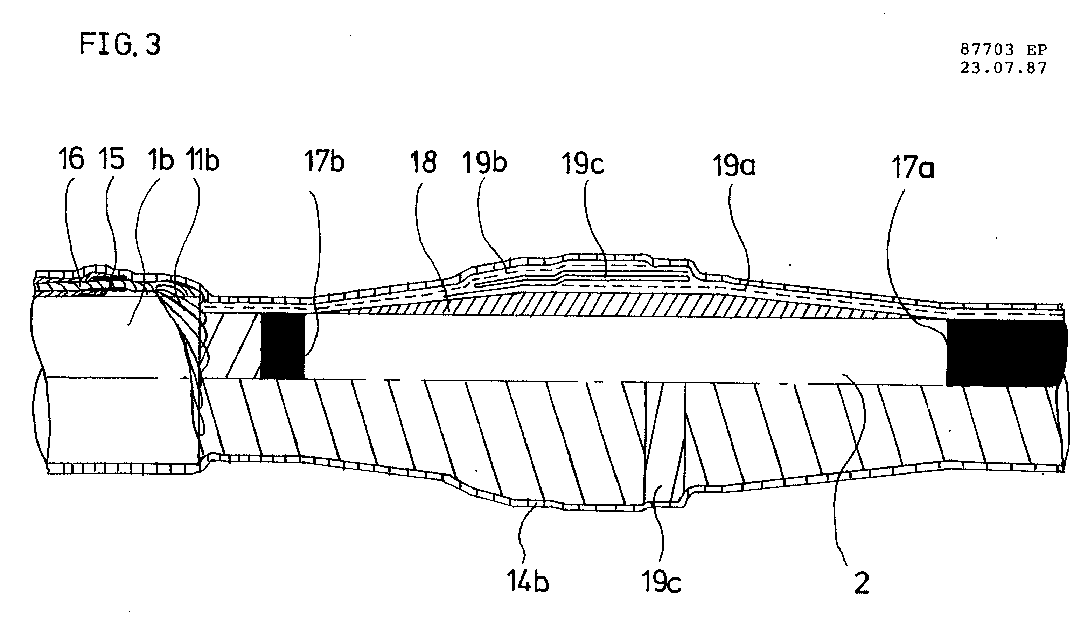

Im folgenden wird der Bereich der Potentialtrennung näher beschrieben, also der mittlere Bereich der Figur 1 bzw. der Inhalt der Figur 3. Dabei ist die Wickelkeule oberhalb der Mittelachse im Längsschnitt dargestellt, unterhalb der Mittelachse in der Draufsicht (ausgenommen die Schrumpfmanschette 14b).

Zwischen den mit 17a und 17b bezeichneten Stellen ist die äußere Leitschicht des Kabels entfernt. Normalerweise handelt es sich bei zur Regenerierung anstehenden Kabeln der in Frage kommenden Art um graphitierte Leitschichten, die sich in bekannter Weise leicht entfernen lassen. Zunächst ist eine mit 18 bezeichnete Wickelkeule aus selbstverschweißenden isolierenden Kunststoffbändern aufgebracht. Dann erfolgt zur Feldsteuerung das Bewickeln mit leitfähigem Band, wobei die Schicht 19a die regenerierstreckenseitige Leitschicht 17a fortsetzt, und die Schicht 19b die reststreckenseitige Leitschicht 17b. Dort,wo die beiden leitfähigen Schichten 19a und 19b sich etwa parallel überlappen, sind sie durch einige Lagen von isolierendem selbstverschweißendem Band getrennt. Eine solche Ausbildung der Potentialtrennung bzw. Wickelkeule hat sich besonders bewährt. Die Schirmdrähte 11b sind über die Mantelabsetzkante 3b zurückgebogen, in einem Preßverbinder 15 zusammengeführt und angeschlossen an eine Anschlußlitze 16 zur Erdung.

Aus Figur 1 ist schließlich noch das rohrförmige Kunststoffgehäuse 20 ersichtlich, das bevorzugt aus zwei Halbschalen besteht, die ihrerseits auf Abschlußwickeln 22 endseitig aufliegen. Das Kunststoffrohr besitzt an entsprechenden Stellen zwei Öffnungsstutzen 21, sogenannte Dome, zur Aufnahme des Gasstutzens und gegebenenfalls der Heizstrom-und Erdungslitzen. Der gesamte Hohlraum zwischen Gehäuse 20 und dem Kabel 1 bzw. der Rohrhülse 5 und sonstigen Teilen wird bevorzugt mit Gießharz ausgefüllt. Auch Bitumen oder eine andere isolierende, aushärtende Masse kommt in Betracht.

Es versteht sich, daß manche der vor Ort aufgebrachten Zentrier-, Abstands-, Dicht-sowie Feldsteuer-Wickel zumindest teilweise auch in vorgefertigter Form eingesetzt werden können.

Im folgenden sei das zeichnerisch dargestellte Ausführungsbeispiel noch ergänzt durch ein Verfahrensbeispiel.

Es wurde die Regenerierung eines 12 Jahre alten VPE-isolierten Kunststoffkabels vorgenommen mit einer Netzspannung 12/20 kV, einem Leiterquerschnitt von 240 mm² (Aluminium) und einem Schirmquerschnitt von 25 mm². Um eine Schirmerwärmung auf 50 bis 70 °C zu erreichen, war ein Heizstrom von etwa 300 A nötig.

Das zu regenerierende Kabel wurde zunächst abgeschaltet, um die vorbeschriebene Anschlußvorrichtung anzubringen. Sodann wurde mehrere Tage mit trockenem Stickstoff gespült. Der Feuchtigkeitsgehalt des am anderen Ende austretenden Gases wurde durch eine Silikagel-Vorlage laufend überwacht. Nachdem die Vorlage nicht mehr weiter verfärbt wurde, wurde der Heizstrom zugeschaltet. Dazu war der Schirm der nicht zu regenerierenden Reststrecke zu erden. Bei der gegebenen erheblichen Durchfeuchtung des Kabels war der Trockenvorgang nach etwa 800 h abgeschlossen. Die Restfeuchte der Aderisolierung lag unter 50 ppm. Sodann wurde der Gasanschluß ausgetauscht und Stickstoff durch Schwefelhexafluorid ersetzt. Anschließend wurde die elektrische Durchschlagfestigkeit des Kabels geprüft. Sie hatte sich um den Faktor 2 gegenüber dem vor der Regenerierung gemessenen Wert verbessert.

BEZUGSZEICHENLISTE

1 Kabelmantel
(a = regenerierstreckenseitig, b = reststreckenseitig)
2 Aderisolierung
3 Mantelabsetzkante
4 Zentrierwickel (an der Rohrhülse)
5 metallene Rohrhülse
6 Rohrhülse-Längskante
7 Gaseinführungsstutzen
8 Heizstromanschluß (z.B. Preßkabelschuh)
9 Kupferanschlußlitze
10 Isolierschrumpfschlauch
11 Schirmdrähte
(a = regenerierstreckenseitig, b = reststreckenseitig)
12 Bindedraht bzw. -litze für Schirmdrähte
13 Dichtwickel (aus Kunststoffbändern)
14 Kunststoffschrumpfmanschette
(a, b = zweiteilig, evtl. längsdurchgehend)
15 Preßverbinder (für Anschlußlitze)
16 Anschlußlitze zur Erdung

17 äußere Leitschicht bzw. Absetzkante
(a = regenerierstreckenseitig, b = reststreckenseitig)
18 Wickelkeule(im Bereich der Potentialsteuerung
19a, 19b, 19c Potentialsteuerung mit drei Schichten, davon 19c isolierend
20 Kunststoffrohrgehäuse
21 Öffnungsstutzen (Dom)
22 Abschlußwickel (am Gehäuse)
23 Hohlraum bzw. Gießharzfüllung

**Ansprüche**

1. Verfahren zum Regenerieren von bereits verlegten, geschirmten Starkstromkabeln mit Aderisolierung aus Kunststoff, insbesondere Polyethylen oder VPE, mit sogenannter watertree-Schädigung, mittels Durchleitung trockenen Gases, wie vorzugsweise Stickstoff, dadurch **gekennzeichnet**, daß zumindest ein Teil des eingespeisten Gases das Kabel entlang seines Schirmbereiches durchströmt und dieser mittels Anschluß des Schirmes an einen Heizstrom zumindest zeitweise erwärmt wird.

2. Verfahren nach Anspruch 1, dadurch **gekennzeichnet**, daß als Heizstrom Gleichstrom verwendet wird.

3. Verfahren nach Anspruch 1, dadurch **gekennzeichnet**, daß ein Teil des eingespeisten Gases in an sich bekannter Weise das Kabel im Bereich seines Leiters durchströmt.

4. Verfahren nach mindestens einem der vorangehenden Ansprüche, dadurch **gekennzeichnet**, daß der Schirmbereich einschließlich der angrenzenden Bereiche der Aderisolierung auf Temperaturen von etwa 40 bis 80 °C, bevorzugt 50 bis 70 °C, erwärmt wird.

5. Verfahren nach mindestens einem der vorangehenden Ansprüche, dadurch **gekennzeichnet**, daß das Gas mit einem Überdruck von bis zu 0,2 MPa, bevorzugt bis zu 0,1 MPa, eingeleitet wird.

6. Verfahren nach mindestens einem der vorangehenden Ansprüche, dadurch **gekennzeichnet**, daß in einer ersten Phase Inertgas, insbesondere Stickstoff, durchgeleitet wird und daß in einer zweiten Phase zusätzlich erwärmt wird durch Beaufschlagung des Kabelschirms mit Heizstrom.

7. Verfahren nach mindestens einem der vorangehenden Ansprüche, dadurch **gekennzeichnet**, daß nach Abschluß der Trocknungsphase Schwefelhexafluorid eingeleitet und zwecks Imprägnierung der Aderisolierung im Kabel belassen wird.

8. Verfahren nach Anspruch 7, dadurch **gekennzeichnet**, daß das regenerierte Kabel mit Schwefelhexafluorid unter einem kontrollierten geringen Überdruck bis 0,05 MPa, vorzugsweise von 0,01 bis 0,02 MPa, dauerbeaufschlagt und damit zugleich auf Leckage bzw. Mantelbeschädigung überwacht wird.

9. Verfahren nach mindestens einem der vorangehenden Ansprüche, dadurch **gekennzeichnet**, daß zusätzlich oder wahlweise zur Beheizung der Schirmdrähte eine Beheizung des Leiters erfolgt.

10. Kabelanschlußvorrichtung zur Durchführung des Verfahrens nach mindestens einem der Ansprüche 1 bis 9, **gekennzeichnet** durch eine metallene, unmagnetische Rohrhülse oder dgl. (5), die regenerierstreckenseitig den Kabelmantel (1a) und andernends die Aderisolierung (2) gasdicht umschließt, mindestens einen Gaseinführungs-bzw. Auslaßstutzen (7) im Bereich des abgesetzten Kabelmantels aufweist, sowie gegebenen falls Anschlüsse (8) für eine elektrische Zuleitung (9) von außen zur Verbindung mit den Schirmdrähten (11a) des regenerierstreckenseitigen Kabelabschnittes.

11. Kabelanschlußvorrichtung nach Anspruch 10, dadurch **gekennzeichnet**, daß die Rohrhülse (5) längsgeteilt ausgebildet ist und die notwendigen Anschlüsse (7, 8) für Gas-und Stromzuführung werkseitig angebracht bzw. vorbereitet sind.

12. Kabelanschlußvorrichtung nach Anspruch 10 oder 11, dadurch **gekennzeichnet**, daß die Rohrhülse (5) im wesentlichen aus zwei vorgefertigten Metallhalbschalen besteht und mantel-wie aderseitig mit einer längsgeteilten Kunststoffschrumpfmanschette (14) abgedichtet ist.

13. Kabelanschlußvorrichtung nach Anspruch 12, dadurch **gekennzeichnet**, daß unterhalb der Kunststoffschrumpfmanschette (14) Dichtwickel (13a, 13b) aus selbstverschweißenden, elastischen Kunststoffbändern aufgebracht sind.

14. Kabelanschlußvorrichtung nach mindestens einem der Ansprüche 10 bis 13, zur Regenerierung eines Streckenabschnittes eines verlegten elektrischen Kabels, dadurch **gekennzeichnet**, daß in unmittelbarer Nähe der Rohrhülse (5) auf der der Regenerierstrecke gegenüberliegenden Seite eine Schirmtrennung vorgesehen ist, wobei die Schirmdrähte (11) regenerierstreckenseitig (vgl. 11a), bevorzugt durch Anschluß an der Rohrhülse (5), mit der äußeren Heizstromzuleitung (8, 9) verbunden, reststreckenseitig (vgl. 11b) in einigem Abstand von der Rohrhülse (5) zwecks Erdung aus dem Kabel herausgeführt (vgl. 16) sind.

15. Kabelanschlußvorrichtung nach Anspruch 14, dadurch **gekennzeichnet**, daß im Bereich der Schirmtrennung zusätzlich zwecks Potentialtrennung durch Abtragung über eine Länge von vorzugsweise etwa 20 bis 150 mm in der schirmdrahtfreien Zone eine Unterbrechung der äußeren Leitschicht (vgl. 17a und 17b) vorgenommen ist und an ihren beiden Enden Mittel (19) zur Feldsteuerung vorgesehen sind.

16. Kabelanschlußvorrichtung nach Anspruch 15, dadurch **gekennzeichnet**, daß als Mittel zur Feldsteuerung eine an sich bekannte konische Bewicklung mittels isolierender und leitfähiger, selbstverschweißender Bänder (18, 19a, 19b, 19c) vorgesehen ist.

17. Kabelanschlußvorrichtung nach mindestens einem der Ansprüche 10 bis 16, dadurch **gekennzeichnet**, daß die Vorrichtung von einem längsgeteilten Kunststoffgehäuse (20) umgeben ist, das endseitig durch auf dem Kabelmantel (1a, 1b) aufgebrachte Wickel (22) zentriert und abgedichtet ist, mit Öffnungsstutzen (21), welche auch die Zuleitungen für Heizstrom, Erdung und Gas aufnehmen können, wobei der innenliegende Hohlraum (23) durch eine erhärtende Masse ausgegossen ist.

18. Kabelanschlußvorrichtung nach Anspruch 17, dadurch **gekennzeichnet**, daß der Hohlraum (23) mit Gießharz ausgegossen ist.

19. Kabelanschlußvorrichtung nach mindestens einem der Ansprüche 10 bis 18, dadurch **gekennzeichnet**, daß die Schirmdrähte (11a) gleichmäßig am Umfang verteilt achsparallel auf die vorzugsweise aus Kupfer bestehende Rohrhülse (5) aufgelötet sind.

87703 EP
23.07.87

FIG.1

FIG. 2

87703 EP
23.07.87

0 256 419

FIG. 3

87703 EP
23.07.87

16  15  1b  11b      17b      18  19b      19c      19a      17a

0 256 419

14b      19c      2